# EUROPÄISCHE PATENTSCHRIFT

(11) **EP 0 857 122 B1**
(45) Veröffentlichungstag und Bekanntmachung des Hinweises auf die Patenterteilung: **23.08.2000**
(21) Anmeldenummer: 97929112.7
(22) Anmeldetag: 18.06.1997
(51) Int. Cl.: B60R 13/02, B60R 13/04

(54) **VERKLEIDUNGSTEIL, INSBESONDERE FÜR BLECHTRAGTEILE BEI KRAFTFAHRZEUGEN**
COATING ELEMENT, IN PARTICULAR FOR SHEET PANELS IN VEHICLES
PIECE D'HABILLAGE, NOTAMMENT POUR ELEMENTS SUPPORT DE TOLE DE VEHICULES

(30) Priorität: 25.08.1996 DE 19634246
(43) Veröffentlichungstag der Anmeldung: 12.08.1998
(73) Patentinhaber: Möller Plast GmbH, 33649 Bielefeld (DE)
(72) Erfinder: BECKMANN, Friedhelm, D-32120 Hiddenhausen (DE)
(74) Vertreter: Schirmer, Siegfried, Dipl.-Ing.
(86) Internationale Anmeldenummer: DE9701240
(87) Internationale Veröffentlichungsnummer: WO9808710

(56) Entgegenhaltungen:
- EP-A- 0 069 368
- DE-A- 3 109 266
- FR-A- 2 321 406
- US-A- 4 563 374
- US-A- 4 786 540
- US-A- 5 330 805
- US-A- 5 531 499
- PATENT ABSTRACTS OF JAPAN vol. 8, no. 112 (M-298), 25.Mai 1984 & JP 59 020630 A (HASHIMOTO FORMING KOGYO KK), 2.Februar 1984,

## Beschreibung

Die Erfindung betrifft ein Verkleidungsteil zur Absorption von Stoßenergie, insbesondere für Blechtragteile von Kraftfahrzeugen, bestehend aus einem einteiligen durch Blasformen hergestellten Hohlprofil mit in dieses integrierten Befestigungselementen zur auswechselbaren Befestigung des Hohlprofils mit seiner Rückseite an einer Auflagefläche, und mit mindestens einer in die Rückseite eingeformten, in Längsrichtung verlaufenden Vertiefung, die mit der angrenzenden Auflagefläche einen Hohlraum bildet.

Die Sicherheitsvorkehrungen in der Kraftfahrzeugindustrie erfordern, daß in den kopfaufprallgefährdeten Innenbereichen zur Reduzierung des Verletzungsrisikos energieabsorbierende Materialien angeordnet werden. Zur Erfüllung dieser Anforderungen werden in den gefährdeten Bereichen Airbagsysteme oder im Spritzgießverfahren hergestellte Verkleidungen angeordnet, wobei die Verkleidungen mit einem geeigneten Schaumsystem hinterfüttert werden.

Aus der US 4 786 540 ist bereits ein Aufprallelement aus einem durch Blasformgebung hergestellten Hohlkörper mit integrierten Befestigungselementen bekannt. Der Hohlkörper ist mit einem Schaummaterial gefüllt und an der zu der betreffenden Auflager- oder Befestigungsfläche gerichteten Rückseite befindet sich eine Deckschicht zur Schallisolierung. Die Aufnahme von Aufprallstößen erfolgt damit im wesentlichen über die freie Außenfläche des Aufprallelements und das im Innern der Hohlkörpers eingeschlossene Schaummaterial.

Die JP 59020630 beschreibt ein Verfahren zur Herstellung eines durch Blasformen gebildeten Hohlkörpers mit an dessen Bodenfläche während des Blasformens angebrachten Befestigungsmitteln. Bei der Herstellung soll eine gleichbleibende unverschiebbare Position der Befestigungsmittel gesichert werden. Zu diesem Zweck werden die Befestigungsteile vor dem Blasformprozeß in Hohlräumen der Form gehalten und an ihren Befestigungsseiten mit einem Bindemittel bestrichen.

Aus der US 4 563 374 ist schließlich ein gattungsgemäßes Verkleidungsteil (Schutzstreifen) mit stoßabsorbierender Wirkung bekannt, das an seiner zur Auflagefläche des Fahrzeugs gerichteten Rückseite in Längsrichtung quer ausgerichtete Vertiefungen sowie eine Längsvertiefung aufweist. Dadurch soll der Schutzstreifen den hohen Wärmedehnungen der Auflagefläche folgen können, und andererseits dienen die Spitzen der Vertiefungen der durchgehenden Abstützung der oberen Fläche des Schutzstreifens bei einer Stoßeinwirkung. Die Stoßabsorptionswirkung bei einem Aufprall ist bei einem derart ausgebildeten Schutzstreifen gering.

Der Erfindung liegt daher die Aufgabe zugrunde, ein Verkleidungsteil zur Absorption von Stoßenergie anzugeben, das in der Lage ist, die bei einem Aufprall auftretenden Stoßkräfte in hohem Maße zu absorbieren und damit die Verletzungsgefahr zu mindern.

Erfindungsgemäß wird die Aufgabe bei einem Verkleidungsteil zur Absorption von Stoßenergie gemäß dem Oberbegriff des Patentanspruchs 1 in der Weise gelöst, daß die in Längsrichtung des Hohlprofils verlaufende Vertiefung mit einer stufenförmig profilierten Wandung ausgebildet ist.

Durch eine in dieser Art in die Rückseite des Verkleidungsteils eingeformte Vertiefung ist neben der freien Oberseite des Verkleidungsteils, die bei einem Unfall unmittelbar von der Stoßeinwirkung betroffen ist, auch die Rückseite in der Lage, Stoßenergie aufzunehmen, die sich aufgrund der stufenförmig profilierten Gestaltung der Wandung der Vertiefung ebenfalls in Stoßrichtung verformen kann.

Der Grundgedanke der Erfindung besteht mit anderen Worten in der Ausbildung einer von der Rückseite zur Oberseite des Hohlprofils gerichteten Vertiefung, die bei Stoßeinwirkung nach Verformung der Oberseite ebenfalls verformbar ist. Dadurch ist es möglich einen größeren Teil der Aufprallenergie aufzunehmen.

Die stufenförmige Profilierung der Wandungen der Vertiefungen kann in weiterer Ausbildung der Erfindung mit scharfen oder gerundeten Kanten versehen sein oder faltenartig abgerundet einsgebildet sein. Außerdem kann sich die Materialsein. Außerdem kann sich die Materialstärke der Wandungen allmählich ändern oder es können als Sollbruchstellen dienende Materialschwachstellen vorgesehen sein.

Nach einem weiteren Merkmal der Erfindung kann die stoßabsorbierende Wirkung zusätzlich dadurch beeinflußt werden, daß in einem der beiden von dem Hohlprofil und von der Vertiefung mit der Auflagefläche gebildeten Hohlräumen - oder auch in beiden - ein Schaumstoff bzw. ein Schaumstoffkörper vorgesehen ist, deren Dichte zudem unterschiedlich sein kann.

Aus den Unteransprüchen ergeben sich weitere Merkmale und zweckmäßige Ausgestaltungen der Erfindung.

Ausführungsbeispiele der Erfindung sind in der Zeichnung dargestellt und werden nachfolgend näher erläutert. Alle Figuren sind Horizontalschnitte. Es zeigen:
- Fig. 1: ein Hohlprofil mit nur einer abgerundeten stufenförmigen Profilierung der Wandung der Vertiefung, die im wesentlichen über die Breite des Hohlprofils reicht und in Längsrichtung verläuft;
- Fig. 2: ein Hohlprofil mit gerade ausgebildeten Profilierungsstufen;
- Fig. 3: ein Hohlprofil mit zwei in Längsrichtung nebeneinander verlaufenden Vertiefungen mit stufenförmig profilierter Wandung;
- Fig. 4 bis 6: vergrößerte Darstellungen von geraden, gefalteten und abgerundeten stufenförmigen Profilierungen der Wandungen mit sich verringernder Wandstärke;
- Fig. 7: ein Hohlprofil in einer Ausbildung nach Fig. 3, jedoch mit einer Ausschäumung des Hohlraums im Innern der Hohlkörpers;
- Fig. 8: ein Hohlprofil in einer Ausbildung nach Fig. 3, jedoch mit einem Schaumprofilteil in den beiden Vertiefungen;
- Fig. 9: ein Hohlprofil in einer Ausbildung nach Fig. 7, jedoch mit zusätzlicher Anordnung eines Schaumprofilteils in den Vertiefungen; und
- Fig. 10: das Hohlprofil nach Fig. 9, jedoch mit einem auf dessen freier Außenseite angebrachten Oberflächendekormaterial.

In der Zeichnung ist das Hohlprofil mit dem Bezugszeichen 1, das auf dessen freier Außenfläche angebrachte Oberflächendekormaterial mit 4, der Schaum im Innern der Hohlprofils mit 5 und das in die Vertiefungen auf der Rückseite des Hohlprofils eingebrachte Schaumprofilteil mit 7 bezeichnet. Mit dem Bezugszeichen 6 sind die Anlagebereiche der Rückseite des Hohlprofils an der von einem Blechtragteil eines Kraftfahrzeugs gebildeten Auflagefläche gekennzeichnet.

Das im Blasverfahren hergestellte Hohlprofil 1 liegt mit seinen Anlagebereichen 6 plan an der von einem Blechteil (nicht dargestellt) gebildeten Auflagefläche an und ist mit in die Rückseite des Hohlprofils 1 integrierten Befestigungselementen (nicht dargestellt) mit der Auflagefläche verbunden.

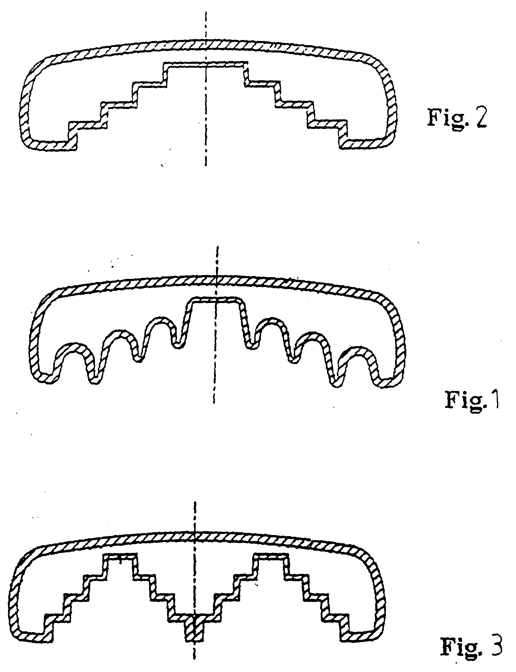

Aus den Figuren 1 bis 3 wird deutlich, daß in die Rückseite des Hohlprofils 3 eine bzw. zwei in dessen Längsrichtung verlaufende Vertiefung(en) eingeformt ist (sind), deren Wandungen stufenförmig profiliert sind, und zwar wellenförmig gefaltet oder mit geraden Stufen.

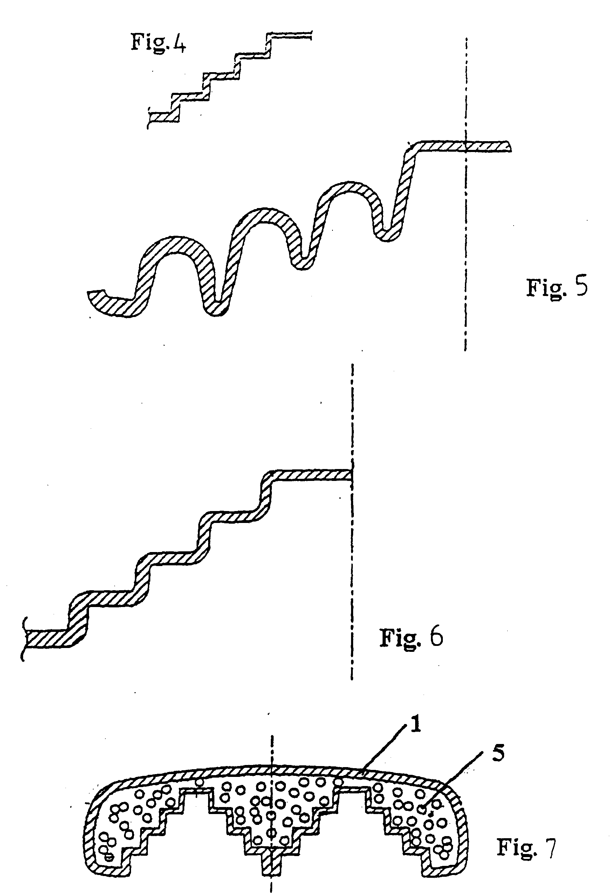

In den Figuren 4 bis 6 sind Wandungen der Vertiefung in vergrößerter Darstellung wiedergegeben. Aus diesen Darstellungen ist ersichtlich, daß die Materialstärke der Wandung zur Spitze der Vertiefung hin allmählich geringer wird. Fig. 4 zeigt gerade und Fig. 6 zeigt abgerundete Stufen. Bei der in Fig. 5 gezeigten gefalteten Abstufung ist außerdem eine Materialschwächung in den Faltenspitzen der Profilierung erkennbar.

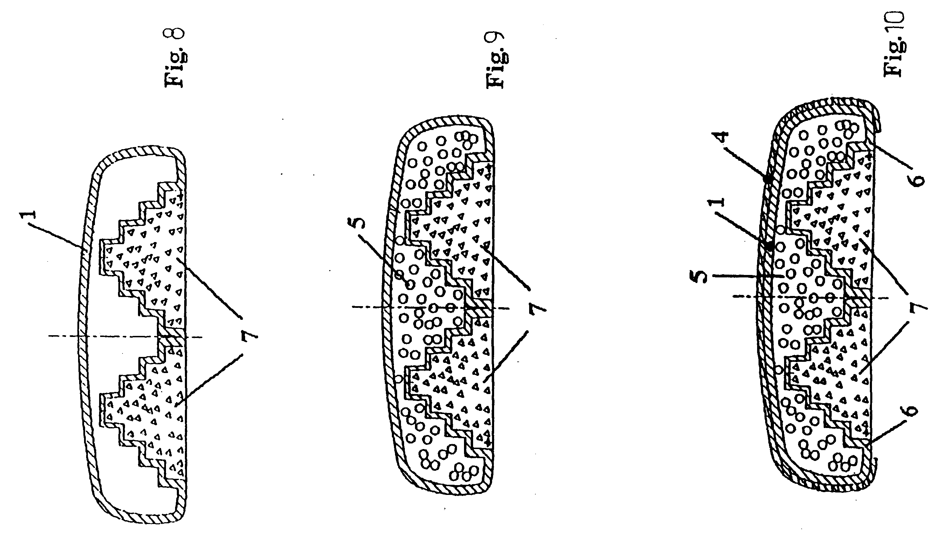

Gemäß den Figuren 7 bis 10 wird eine Schaumstoffüllung zur Erhöhung des Stoßabsorptionsvermögens eingesetzt. Der Schaum 5 kann entweder innerhalb des Hohlprofils (Fig. 7) oder als Schaumprofilteil 7 in den Vertiefungen in der Rückseite des Hohlprofils 1 angeordnet sein oder sich sowohl in dem Hohlprofil als auch in den Vertiefungen befinden (Fig. 9 und 10). Der Schaum 5 und das Schaumprofilteil 7 nach Fig. 9 weisen unterschiedliche Dichte und damit ein unterschiedliches Absorptionsvermögen auf.

## Patentansprüche

1. Verkleidungsteil zur Absorption von Stoßenergie, insbesondere für Blechtragteile von Kraftfahrzeugen, bestehend aus einem einteiligen, durch Blasformen hergestellten Hohlprofil mit in dieses integrierten Befestigungselementen zur auswechselbaren Befestigung des Hohlprofils mit seiner Rückseite an einer Auflagefläche, und mit mindestens einer in die Rückseite eingeformten, in Längsrichtung verlaufenden Vertiefung, die mit der angrenzenden Auflagefläche einen Hohlraum bildet, dadurch gekennzeichnet, daß die in Längsrichtung verlaufende Vertiefung mit einer stufenförmig profilierten Wandung ausgebildet ist.

2. Verkleidungsteil nach Anspruch 1, dadurch gekennzeichnet, daß die Wandung der Vertiefung in der Rückseite des Hohlprofils (1) eine sich ändernde Stärke aufweist.

3. Verkleidungsteil nach Anspruch 2, dadurch gekennzeichnet, daß der an der Auflagefläche anliegende Bereich der Rückseite des Hohlprofils (1) eine größere Wandstärke aufweist als der zur Vorderseite hin verlaufende Bereich der Wandung der Vertiefung.

4. Verkleidungsteil nach einem der Ansprüche 1 bis 3, dadurch gekennzeichnet, daß die Kanten der stufenförmigen profilierten Wandung abgerundet sind.

5. Verkleidungsteil nach einem der Ansprüche 1 bis 4, dadurch gekennzeichnet, daß die stufenförmige Profilierung der Wandung faltenartig abgerundet ausgebildet ist.

6. Verkleidungsteil nach einem der Ansprüche 1 bis 5, dadurch gekennzeichnet, daß in der stufenförmig profilierten Wandung Materialschwachstellen zur Bildung von Sollbruchstellen ausgebildet sind.

7. Verkleidungsteil nach einem der Ansprüche 1 bis 6, dadurch gekennzeichnet, daß das Hohlprofil (1) mit einem Schaum (5) gefüllt ist, der durch Umblasen während des Blasformvorgangs oder durch Einschäumen in einem nachgeschalteten Arbeitsgang einbringbar ist.

8. Verkleidungsteil nach einer der Ansprüche 1 bis 7, dadurch gekennzeichnet, daß in den durch die Vertiefung und die Auflagefläche gebildeten Hohlraum ein Schaum eingebracht ist.

9. Verkleidungsteil nach Anspruch 8, dadurch gekennzeichnet, daß der Schaum als ein einziges Schaumprofilteil (7) ausgebildet ist.

10. Verkleidungsteil nach einem der Ansprüche 7 bis 9, dadurch gekennzeichnet, daß der Schaum (5) und das Schaumprofilteil (7) unterschiedliche Dichte aufweisen.

11. Verkleidungsteil nach einem der Ansprüche 7 bis 10, dadurch gekennzeichnet, daß der Schaum (5) und das Schaumprofilteil (7) aus unterschiedlichen Grundmaterialien gebildet sind.

12. Verkleidungsteil nach einem der Ansprüche 1 bis 11, dadurch gekennzeichnet, daß die Befestigungselemente umblasen sind.

13. Verkleidungsteil nach einem der Ansprüche 9 bis 11, dadurch gekennzeichnet, daß das Hohlprofil (1) über das Schaumprofil (7) an die Auflagefläche anschließbar ist.

14. Verkleidungsteil nach Anspruch 13, dadurch gekennzeichnet, daß im Schaumprofilteil (7) Befestigungselemente verankert sind, denen entsprechende Aufnahmen in der Auflagefläche zugeordnet sind.

15. Verkleidungsteil nach einem der Ansprüche 1 bis 14, dadurch gekennzeichnet, daß die Vertiefungen in der Rückseite des Hohlprofils (1) in dessen Längsrichtung abschnittsweise angeordnet sind.

## Claims

1. Panelling part for the absorption of impact energy, in particular for supporting sheet metal parts of motor vehicles, consisting of a one-piece hollow profile part made by blow-moulding and with fastening elements integrated therein for the exchangeable fastening of the hollow profile by its rear side at a bearing surface and with at least one depression which is moulded into the rear side, extends in longitudinal direction and which forms a hollow space with the adjoining bearing surface, characterised in that the depression extending in longitudinal direction is formed with a wall profiled in step shape.

2. Panelling part according to claim 1, characterised in that the wall of the depression has a varying thickness in the rear side of the hollow profile part (1).

3. Panelling part according to claim 2, characterised in that that region of the rear side of the hollow profile part (1), which lies against the bearing surface, has a greater wall thickness than that region of the wall of the depression, which extends towards the front side.

4. Panelling part according to one of claims 1 to 3, characterised in that the edges of the step-shaped profiled wall are rounded off.

5. Panelling part according to one of claims 1 to 4, characterised in that the step-shaped profiling of the wall is formed to be rounded in the manner of folds.

6. Panelling part according to one of claims 1 to 5, characterised in that weak places of material for the formation of intentionally frangible places are formed in the step-shaped profiled wall.

7. Panelling part according to one of the claims 1 to 6, characterised in that the hollow profile part (1) is filled with a foam (5), which is introducible by blowing around during the blow-moulding operation or by foaming-in in a subsequent operating step.

8. Panelling part according to one of claims 1 to 7, characterised in that a foam is introduced into the hollow space formed the depression and the bearing surface.

9. Panelling part according to claim 8, characterised in that the foam is formed as single foam profile part (7).

10. Panelling part according to one of claims 7 to 9, characterised in that the foam (5) and the foam profile part (7) are of different density.

11. Panelling part according to one of claims 7 to 10, characterised in that the foam (5) and the foam profile part (7) are formed of different basic materials.

12. Panelling part according to one of claims 1 to 11, characterised in that the fastening elements are blow-moulded around.

13. Panelling part according to one of claims 9 to 11, characterised in that the hollow profile part (1) is connectable by way of the foam profile part (7) to the bearing surface.

14. Panelling part according to claim 13, characterised in that fastening elements, which are associated with corresponding receptacles in the bearing surface, are anchored in the foam profile part (7).

15. Panelling part according to one of claims 1 to 15, characterised in that the depressions in the rear side of the hollow profile part (1) are arranged in stages in the longitudinal direction thereof.

## Revendications

1. Pièce de garnissage pour absorber l'énergie d'un choc, en particulier destinée à des pièces porteuses en tôle de véhicules automobiles, constituée d'un profilé creux monobloc moulé par soufflage et dans lequel sont intégrés des éléments de fixation permettant d'appliquer le profilé creux par sa face arrière sur une surface d'appui en le fixant de manière amovible, cette face arrière présentant au moins un renfoncement moulé, dirigé longitudinalement et délimitant avec la surface d'appui un volume creux,
caractérisée en ce que
le renfoncement à direction longitudinale est constitué par une paroi profilée selon une forme étagée.

2. Pièce de garnissage selon la revendication 1,
caractérisée en ce que
la paroi du renfoncement créée sur la face arrière du profilé creux (1), présente une épaisseur qui varie.

3. Pièce de garnissage selon la revendication 2,
caractérisée en ce que
la zone de la face arrière du profilé creux (1), qui est en contact avec la portée d'appui, a une épaisseur supérieure à celle de la partie de cette paroi située vers l'avant.

4. Pièce de garnissage selon l'une quelconque des revendications 1 à 3,
caractérisée en ce que
les bords de la paroi à profil étagé sont arrondis.

5. Pièce de garnissage selon l'une quelconque des revendications 1 à 4,
caractérisée en ce que
le profil étagé de la paroi a la forme de plis arrondis.

6. Pièce de garnissage selon l'une quelconque des revendications 1 à 5,
caractérisée en ce que
dans la paroi à profil étagé, il existe des affaiblissements localisés de la matière pour créer des zones de rupture imposée.

7. Pièce de garnissage selon l'une quelconque des revendications 1 à 6,
caractérisée en ce que
le profilé creux (1) est rempli d'une mousse (5) introduite par soufflage pendant l'opération de moulage ou au cours d'une phase ultérieure.

8. Pièce de garnissage selon l'une quelconque des revendications 1 à 7,
caractérisée en ce qu'
on introduit une mousse dans l'espace creux délimité par le renfoncement et la portée d'appui.

9. Pièce de garnissage selon l'une quelconque des revendications 1 à 8,
caractérisée en ce que
la mousse est constituée par une pièce monobloc profilée (7).

10. Pièce de garnissage selon l'une quelconque des revendications 7 à 9,
caractérisée en ce que
la mousse (5) et la pièce profilée en mousse (7) ont des densités différentes.

11. Pièce de garnissage selon l'une quelconque des revendications 7 à 10,
caractérisée en ce que
la mousse (5) et la pièce profilée en mousse (7) sont constituées à partir de matériaux de base différents.

12. Pièce de garnissage selon l'une quelconque des revendications 1 à 11,
caractérisée en ce que
les éléments de fixation sont englobés dans le soufflage.

13. Pièce de garnissage selon l'une quelconque des revendications 9 à 11,
caractérisée en ce que
le profilé creux (1) peut être raccordé à la surface d'appui par le profilé en mousse (7).

14. Pièce de garnissage selon la revendication 13,
caractérisée en ce que
dans la pièce profilée en mousse (7), sont ancrées des éléments de fixation auxquels sont associés des logements correspondant à la portée d'appui.

15. Pièce de garnissage selon l'une quelconque des revendications 1 à 14,
caractérisée en ce que
les renfoncements de la face arrière du profilé creux (1) sont disposés de manière fractionnée, selon sa direction longitudinale.
